# EUROPEAN PATENT APPLICATION

(11) **EP 2 763 418 A1**
(43) Date of publication of application: **06.08.2014**
(21) Application number: 12840860.6
(22) Date of filing: 05.12.2012
(51) Int. Cl.: H04N 13/04, G02B 27/22

(54) **EYEGLASS-BASED 3D INTELLIGENT TERMINAL AND SYSTEM**

(71) Applicant: Shenzhen Coocaa Network Technology Co., Ltd, Nanshan Shenzhen Guangdong 518057 (CN)
(72) Inventor: CHEN, Dijun, Nanshan, Shenzhen Guangdong 518057 (CN)
(74) Representative: Zenz
(86) International application number: PCT/CN2012/085885
(87) International publication number: WO 2014/085991

(57) **Abstract**

The present invention relates to intelligent terminal field, and provides a 3D intelligent terminal and a system based on glasses. The 3D intelligent terminal includes a camera, a signal processing unit, a register, a glasses switching signal emitter and a screen, the camera is used for taking a picture for objects in front of the screen of the 3D intelligent terminal, the signal processing unit is used for analyzing a taken images, judging if there is an audience in every pre-divided area and recording judging results in the register, the signal processing unit is also used for determining in which pre-divided area every audience is located, decoding the images of viewpoints corresponding to pre-divided areas with audience and sending the images of the viewpoints to the screen to display, the glasses switching signal emitter is used for sending glasses switching signals to 3D glasses, the screen is used for outputting the images of the viewpoints decoded by the signal processing unit. The embodiment of the present invention can improve audience's viewing experience.

## Description

### BACKGROUND OF THE INVENTION

### 1. Technical Field

The present invention relates to intelligent terminal field, and more particularly, to a 3D intelligent terminal and a system based on glasses.

### 2. Description of Related Art

With the development of image processing technology and intelligent terminal, a user may watch three-dimensional (3D) images from an intelligent terminal, such as a television, a computer and a telephone, by means of 3D glasses.

At present, most of 3D intelligent terminals require users to wear 3D glasses to watch. As we known that, take televisions for example, 3D televisions based shutter glasses are the most common. Existing 3D intelligent terminals based on glasses have a shortcoming, namely, the 3D intelligent terminals only can display images of left and right viewpoints at the most, so that only the images of the left and the right viewpoints can be watched. The images of two viewpoints simulate different images viewed by a user's left and right eyes when the user stands at a certain angle relative to a screen of the 3D intelligent terminal. This means that a 3D intelligent terminal based on glasses only can provide 3D images at a certain angle, therefore when the user moves from side to side in front of the screen of the 3D intelligent terminal, all of the 3D images viewed by the uses are the images viewed at the same angle, the images are the same in essence.

Since the user only can see the images at one angle, which is significantly different from reality, the existing 3D intelligent terminals based on glasses are difficult to meet the requirement of the user and user experience is bad.

### BRIEF SUMMARY OF THE INVENTION

The embodiment of the present invention provides a television, to overcome the shortcomings of the existing television using android operating system that can't be compatible with a plurality of applications thereby causing complicated operation and inconvenience to users.

An object of an embodiment of the present invention is to provide a 3D intelligent terminal, including a camera, a signal processing unit, a register, a glasses switching signal emitter and a screen, wherein
the camera is used for taking a picture for objects in front of the screen of the 3D intelligent terminal;
the signal processing unit is used for analyzing a taken image, judging if there is an audience in every pre-divided area and recording judging results in the register, the signal processing unit is also used for determining in which pre-divided area every audience is loacted, decoding the images of viewpoints corresponding to pre-divided areas with audience and sending the images of the viewpoints to the screen to display, the number of the pre-divided areas is greater than or equal to three;
the glasses switching signal emitter is used for sending glasses switching signals to 3D glasses, by means of the glasses switching signals left and right lenses of the 3D glasses are turned on by the 3D glasses to receive the images of the viewpoints displayed on the screen;
the screen is used for outputting the images of the viewpoints decoded by the signal processing unit.

Another object of the embodiment of the present invention is to provide a 3D intelligent terminal system based on glasses, the 3D intelligent terminal system includes a 3D intelligent terminal and 3D glasses;
the 3D intelligent terminal is used for taking a picture of objects in front of the screen of the 3D intelligent terminal, judging if there is an audience in every pre-divided area and recording judging results, the 3D intelligent terminal is also used for determining in which pre-divided area every audience is located, decoding the images of viewpoints corresponding to pre-divided areas with audience, sending the images of the viewpoints to the screen to display and sending glasses switching signals to the 3D glasses, wherein the number of the pre-divided areas is greater than or equal to three;
the 3D glasses is used for receiving the glasses switching signals, turning on the left and right lenses of the 3D glasses alternately by means of the glasses switching signals to receive the images of the viewpoints displayed on the screen.

In the embodiments of the present invention, the big area in front of the screen of the 3D intelligent terminal is pre-divided into three or more small areas, therefore audience in different areas can see the images of different viewpoints, and the viewing results are more real.

### BRIEF DESCRIPTION OF THE SEVERAL VIEWS OF THE DRAWINGS

Fig. 1 is a schematic structure view of a 3D intelligent terminal based on glasses according to a first embodiment of the present invention;
Fig. 2 is a schematic structure view of a 3D intelligent terminal system based on glasses according to a second embodiment of the present invention;
Fig. 3 is a schematic view of a 3D intelligent terminal system based on glasses according to the second embodiment of the present invention;
Fig. 4 is a view of the relationship between the on-off of the 3D glasses and displaying viewpoint on the screen when audience is in one area according to the second embodiment of the present invention; and

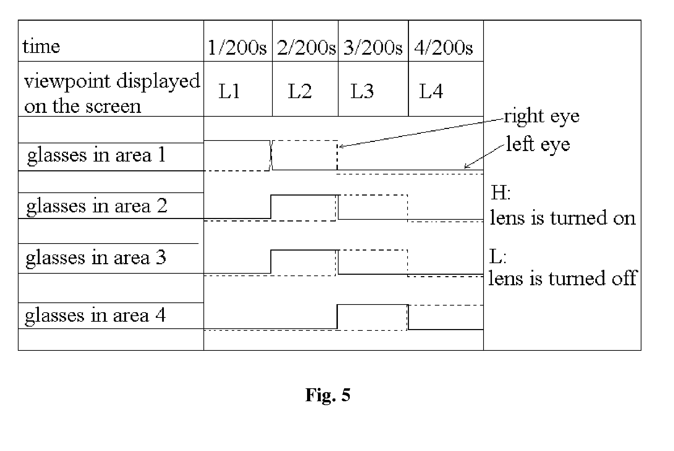

Fig. 5 is a view of the relationship between the on-off of the 3D glasses and displaying viewpoint on the screen when audience is in multi-area according to the second embodiment of the present invention.

### DETAILED DESCRIPTION OF THE INVENTION

In order to make the objects, technical solutions and advantages of the invention clearer, the present invention will be explained below in detail with reference to the accompanying drawings and embodiments. It is to be understood that the following description of the embodiments is merely to explain the present invention and is no way intended to limit the invention.

According to the embodiment of the present invention, the big area in front of the screen of the 3D intelligent terminal is divided into three or more small areas beforehand, after the 3D intelligent terminal is started, objects in front of the screen of the 3D intelligent terminal are shot by the camera of the 3D intelligent terminal, a taken picture is analyzed by the signal processing unit to obtain audience' location information, the images of the viewpoints corresponding to audience' location are decoded and the decoded images of the viewpoints are sent to the screen to display, at the same time, glasses switching signals are sent to 3D glasses by the glasses switching signal emitter, by means of the glasses switching signals the left and right lenses of the 3D glasses are turned on alternately by the 3D glasses to receive corresponding images of the viewpoints.

The following will describe the technical solutions presented in the invention by particular embodiments.

A first embodiment:

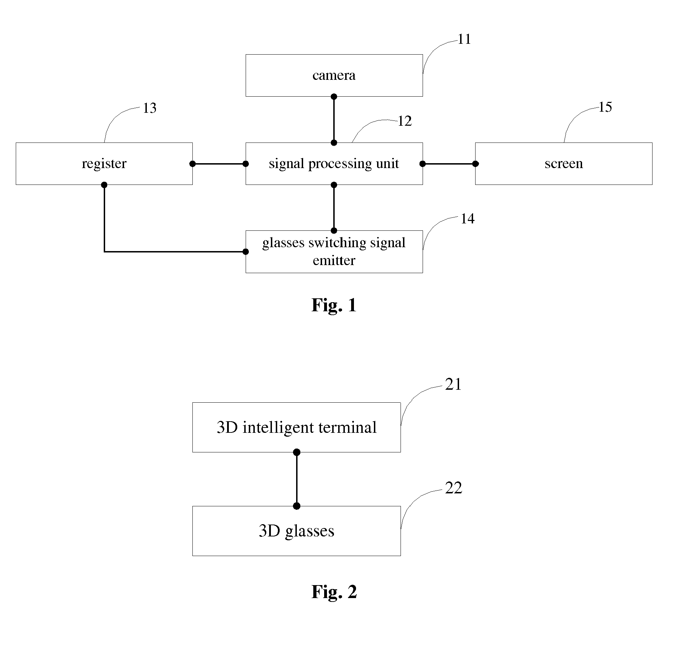

Fig. 1 illustrates a structure of a 3D intelligent terminal based on glasses according to the first embodiment of the present invention. In order to easily describe, only parts related to the first embodiment are illustrated.
In this embodiment, the 3D intelligent terminal based on glasses includes a camera 11, a signal processing unit 12, a register 13, a glasses switching signal emitter 14 and a screen 15.

The camera 11 is used to take a picture for objects in front of the screen of the 3D intelligent terminal.

Preferably, the camera 11 is a rotatable camera.

Preferably, the rotatable camera regularly scans objects in front of the screen of the 3D intelligent terminal. By means of the regularly scan changes of audience in front of the screen of the 3D intelligent terminal may be obtained timely.

The signal processing unit 12 is used for analyzing a taken image, judging if there is an audience in every pre-divided area and recording judging results in the register 13. The signal processing unit 12 is also used for determining in which pre-divided area every audience is located, decoding the images of viewpoints corresponding to pre-divided areas with audience and sending the images of the viewpoints to the screen 15 to display. The number of the pre-divided areas is greater than or equal to three.

In this embodiment, the signal processing unit 12 obtains the image taken by the camera 11 from the camera 11, analyzes the image to judge if there is an audience in every pre-divided area and records judging results in the register 13. Preferably, the signal processing unit 12 judges if there is an audience in every pre-divided area by means of face recognition.

In this embodiment, the signal processing unit 12 is also used for determining in which pre-divided area every audience is located, decoding the images of the viewpoints corresponding to pre-divided areas with audience and sending the images of the viewpoints to the screen 15 to display. For example, it presumes that the area in front of the screen of the 3D intelligent terminal is divided into four areas from left to right, and the leftmost area is area 1. If there is an audience in the area 1, the signal processing unit 12 will decode the images of the viewpoints corresponding to the area 1 and send the images of the viewpoints to the screen 15 to display, so that the audience may see the left side images of objects displayed. Here, every area corresponds to two viewpoints of audience's left and right eyes, and each viewpoint corresponds to a viewpoint image seen by the audience's left or right eye in the area.

The glasses switching signal emitter 14 is used for sending glasses switching signals to 3D glasses so that the left and right lenses of the 3D glasses are turned on by the 3D glasses to receive the images of the viewpoints displayed by the screen 15.

The screen 15 is used for outputting the images of the viewpoints decoded by the signal processing unit 12.

Preferably, a refresh rate of the screen 15 is not less than 50*x Hz wherein the x is the number of the pre-divided areas.

As a preferable embodiment, the method that the signal processing unit 12 determines in which pre-divided area every audience is located includes the following steps: obtaining a unique identity of the 3D glasses worn by every audience from a taken picture; determining in which pre-divided area every audience is located by means of the unique identity of the 3D glasses and the camera angle of the taken picture. In this embodiment, a unique identity is preset on the 3D glasses and is used as an "Identity Code", the unique identity of the 3D glasses may be a pattern light source with a unique shape. The signal processing unit 12 analyzes the picture taken by the camera 11 and obtains the unique identity of the 3D glasses worn by every audience, such as the shape of the pattern light source on the 3D glasses. Then the signal processing unit 12 determines in which pre-divided area each audience is located by means of combining the unique identity of the 3D glasses and the camera angle of the taken picture. The 3D intelligent terminal can automatically identify in which area an audience is located, therefore it doesn't require the audience to operate manually and simplifies the operation.

As a preferable embodiment, the method that the signal processing unit 12 determines in which pre-divided area every audience is located includes the following step: receiving location key information sent by means of pressing 3D glasses by audiences; sending the location key information to the signal processing unit 12, the location key information including the information that in which pre-divided area every audience is located, thereby determining in which pre-divided area every audience is located by the signal processing unit 12. In this embodiment, location keys are preset on the 3D glasses, the number of the location keys is the same with the number of the pre-divided areas, and one location key corresponds to one pre-divided area. For example, from left to right of the screen of the 3D intelligent terminal that the audience faces, the fan-shaped area in front of the intelligent terminal may be pre-divided into four areas, so that the number of the location keys can be set to four, namely location keys 1, 2, 3 and 4. In this embodiment, location key 1 may represent area 1, or location key 4 may represent area 1, as long as one location key corresponds to one pre-divided area, which is not limited.

According to the embodiment of the present invention, the big area in front of the screen of the 3D intelligent terminal is pre-divided into three or more small areas, after the 3D intelligent terminal is started, objects in front of the screen of the 3D intelligent terminal are took by the camera of the 3D intelligent terminal, a taken picture is analyzed by the signal processing unit to obtain audience' location information, the images of the viewpoints corresponding to the audience' location are decoded and the decoded images of the viewpoints are sent to the screen to display, at the same time, glasses switching signals are sent to 3D glasses by the glasses switching signal emitter, by means of the glasses switching signals the left and right lenses of the 3D glasses are turned on alternately by the 3D glasses to receive corresponding images of the viewpoints. The big area in front of the screen of the 3D intelligent terminal is pre-divided into three or more small areas, therefore, audience in different areas can see different images of the viewpoints, and the viewing results are more real.

### A second embodiment:

Fig. 2 illustrates a structure of a 3D intelligent terminal system based on glasses according to the second embodiment of the present invention. In order to easily describe it, parts related to the first embodiment are only illustrated.

In this embodiment, the 3D intelligent terminal system based on glasses includes a 3D intelligent terminal 21 and 3D glasses 22. The 3D intelligent terminal 21 is the same with the 3D intelligent terminal described in the first embodiment which isn't described again here.

In this embodiment, the 3D intelligent terminal is used for taking a picture of objects in front of the screen of the 3D intelligent terminal, judging if there is audience in every pre-divided area and recording judging results. The 3D intelligent terminal is also used for determining in which pre-divided area every audience is located, decoding the images of viewpoints corresponding to pre-divided areas with audience, sending the images of the viewpoints to the screen to display and sending glasses switching signals to 3D glasses, wherein the number of the pre-divided areas is greater than or equal to three.

By means of the glasses switching signals the left and right lenses of the 3D glasses are turned on alternately by the 3D glasses to receive the images of the viewpoints displayed on the screen.

According to the embodiment of the present embodiment, the big area in front of the screen of the 3D intelligent terminal is pre-divided into three or more small areas, therefore audience in different areas can see the images of different viewpoints, and the viewing results are more real.

Preferably, the 3D glasses are provided with a pattern light source with a unique shape, the pattern light source with a unique shape can be a unique identity of the 3D glasses. In this embodiment, a unique identity is preset on 3D glasses and is used as an "Identity Code" of the 3D glasses, the unique identity may be a pattern light source with a unique shape.

Preferably, the 3D glasses are provided with location keys, and the number of the location keys is the same with the number of the pre-divided areas, wherein the number is greater than or equal to three. In this embodiment, location keys are preset on the 3D glasses, if audience locates in a certain area, the location key corresponding to the certain area are pressed down.

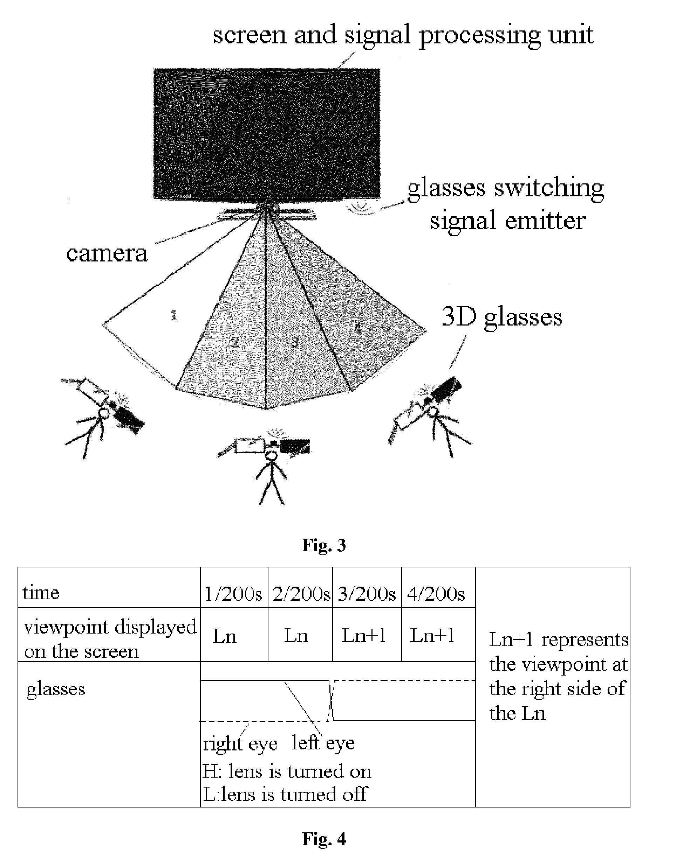

For illustrating the 3D intelligent terminal system based on glasses clearly according to the embodiment of the present invention, a particular application is took for example. Referring to Fig. 3, Fig. 3 is schematic view of a 3D intelligent terminal system based on glasses. In Fig. 3, the area in front of the screen of the 3D intelligent terminal is pre-divided into four areas 1, 2, 3 and 4. Area 1 corresponds to "1" in Fig. 3, by that analogy, the area 2, area 3, and area 4 corresponds to the numbers in Fig. 3 respectively. The following will describe the system with two cases that audience exists in only one area and audience exists in multi-areas:
(1) The case that audience exists in only one area: the images of two viewpoints are displayed alternately on the screen of the 3D intelligent terminal, the images of the viewpoints are dependent on audience's location, so that the audience at the position can see the images of the viewpoints with right angle. The relationship between audience's location and the images of the viewpoints is shown as table 1.

**Table 1:**

| Audience's location area | Images of viewpoints displayed on the screen |
|---|---|
| 1 | images of viewpoints 1 and 2 |
| 2, 3 | images of viewpoints 2 and 3 |
| 4 | images of viewpoints 3 and 4 |

When audience locates in area 1 on left side of the screen, the images of viewpoints 1 and 2, indicating viewing angle of the left side, are displayed on the screen, so that left side images of objects displayed can be seen by audience. Similarly, when audience locates in areas 2, 3 in a center of the screen, the images of viewpoints 2 and 3, indicating viewing angle of the center, are displayed on the screen, so that front images of objects displayed can be seen by audience. When audience locates in area 4 on the right side of the screen, the images of viewpoints 3 and 4, indicating viewing angle of the right side, are displayed on the screen, so that right side images of objects displayed can be seen by audience. In one area the relationship between the on-off of the 3D glasses and displaying viewpoint on the screen is shown as Fig. 4. When viewpoint Ln is displayed on the screen, the left lens is turned on and the right lens is turned off (the solid line represents the left lens, the dotted line represents the right lens, the high level indicates that a lens is turned on, and the low level indicates that a lens is turned off), the images of the Ln viewpoint can be seen by left eye. When viewpoint Ln+1 is displayed on the screen, the left lens is turned off and the right lens is turned on.
(2) The case that audience exists in multi-areas:
Based on the principle of the table 1, the images of four viewpoints are displayed alternately on the screen. In multi-areas the relationship between the on-off of the 3D glasses and displaying viewpoint on the screen is shown as Fig. 4. For audience in different areas, shutter lenses worn by the audience are opened only when the images of the viewpoints corresponding to the areas are displayed on the screen, so that the images of the viewpoints with right viewing angle can be seen by the audience.

When audiences A, B and C locates in areas 1, 2 (or 3) and 4 respectively, they can see the left side images, the center images and the right side images of displayed objects respectively.

When audience A moves in turn from area 1 to area 4, he or she will see the left side images, the center images and the right side images of displayed objects in sequence.

According to the embodiment of the present invention, the big area in front of the screen of the 3D intelligent terminal is pre-divided into three or more small areas, after the 3D intelligent terminal is started, objects in front of the screen of the 3D intelligent terminal are took by the camera of the 3D intelligent terminal, a taken picture is analyzed by the signal processing unit to obtain audience' location information, the images of the viewpoints corresponding to audience' location are decoded and the decoded images of the viewpoints are sent to the screen to display, at the same time, glasses switching signals are sent to 3D glasses by the glasses switching signal emitter, by means of the glasses switching signals the left and right lenses of the 3D glasses are turned on alternately by the 3D glasses to receive corresponding the images of the viewpoints. The big area in front of the screen of the 3D intelligent terminal is pre-divided into three or more small areas, therefore audiences in different areas can see the images of different viewpoints, and the viewing results are more real.

The present invention has been further detailed in the above descriptions with reference to the preferred embodiments; however, it shall not be construed that implementations of the present invention are only limited to these descriptions. Many simple deductions or replacements may further be made by those of ordinary skill in the art without departing from the conception of the present invention, and all of the deductions or replacements shall be considered to be covered within the protection scope of the present invention.

## Claims

1. A 3D intelligent terminal based on glasses, **characterized in that**, the 3D intelligent terminal comprises a camera, a signal processing unit, a register, a glasses switching signal emitter and a screen,
the camera is used for taking a picture for objects in front of the screen of the 3D intelligent terminal;
the signal processing unit is used for analyzing a taken image, judging if there is an audience in every pre-divided area and recording judging results in the register, the signal processing unit is also used for determining in which pre-divided area every audience is loacted, decoding the images of viewpoints corresponding to pre-divided areas with audience and sending the images of the viewpoints to the screen to display, the number of the pre-divided areas is greater than or equal to three;
the glasses switching signal emitter is used for sending glasses switching signals to the 3D glasses, by means of the glasses switching signals the left and right lenses of the 3D glasses are turned on by the 3D glasses to receive the images of the viewpoints displayed on the screen;
the screen is used for outputting the images of the viewpoints decoded by the signal processing unit.

2. The 3D intelligent terminal of Claim 1, **characterized in that** the camera is a rotatable camera.

3. The 3D intelligent terminal of Claim 2, **characterized in that** the rotatable camera regularly scans objects in front of the screen of the 3D intelligent terminal.

4. The 3D intelligent terminal of Claim 1, **characterized in that** a refresh rate of the screen is not less than 50*x Hz wherein the x is the number of the pre-divided areas.

5. The 3D intelligent terminal of Claim 1, **characterized in that** the signal processing unit judges if there are audiences in every pre-divided area by means of face recognition.

6. The 3D intelligent terminal of Claims 1 to 5, **characterized in that** the step that the signal processing unit determines in which pre-divided area every audience is located comprises: obtaining a unique identity of the 3D glasses worn by every audience from the taken picture; determining in which pre-divided area every audience is located by means of the unique identity of the 3D glasses and the camera angle of the taken picture.

7. The 3D intelligent terminal of Claims 1 to5, **characterized in that** the step that the signal processing unit determines in which pre-divided area every audience is located comprises: receiving location key information sent by means of pressing 3D glasses by the audience; sending the location key information to the signal processing unit, the location key information including the information that in which pre-divided area every audience is located, thereby determining in which pre-divided area every audience is located by the signal processing unit.

8. A 3D intelligent terminal system based on glasses, **characterized in that** the 3D intelligent terminal system comprises a 3D intelligent terminal and 3D glasses; the 3D intelligent terminal is used for taking a picture for objects in front of the screen of the 3D intelligent terminal, judging if there is an audience in every pre-divided area and recording judging results, the 3D intelligent terminal is also used for determining in which pre-divided area every audience is located, decoding the images of viewpoints corresponding to pre-divided areas with audience, sending the images of the viewpoints to the screen to display and sending glasses switching signals to the 3D glasses, wherein the number of the pre-divided areas is greater than or equal to three;
the 3D glasses is used for receiving the glasses switching signals, turning on the left and right lenses of the 3D glasses alternately by means of the glasses switching signals to receive the images of the viewpoints displayed on the screen.

9. The 3D intelligent terminal system of Claim 8, **characterized in that** the 3D glasses are provided with a pattern light source with a unique shape, the pattern light source with a unique shape is a unique identity of the 3D glasses.

10. The 3D intelligent terminal system of Claim 8, **characterized in that** the 3D glasses are provided with location keys, the number of the location keys is the same with the number of the pre-divided areas.
